Europäisches Patentamt

European Patent Office

Office européen des brevets

(11) Numéro de publication : **0 490 788 B1**

# FASCICULE DE BREVET EUROPEEN

(45) Date de publication du fascicule du brevet :
**11.10.95 Bulletin 95/41**

(51) Int. Cl.$^6$ : **H02H 9/04, H04M 3/18**

(21) Numéro de dépôt : **91420431.8**

(22) Date de dépôt : **03.12.91**

(54) **Circuit de protection à faible capacité.**

(30) Priorité : **07.12.90 FR 9015641**

(43) Date de publication de la demande :
**17.06.92 Bulletin 92/25**

(45) Mention de la délivrance du brevet :
**11.10.95 Bulletin 95/41**

(84) Etats contractants désignés :
**DE FR GB IT**

(56) Documents cités :
**FR-A- 2 433 845**
**GB-A- 2 225 908**
**US-A- 4 282 555**

(73) Titulaire : **SGS-THOMSON
MICROELECTRONICS S.A.
7, Avenue Galliéni
F-94250 Gentilly (FR)**

(72) Inventeur : **Pezzani, Robert
4, Résidence La Thibaudière,
Parçay-Méslay
F-37210 Vouvray (FR)**

(74) Mandataire : **de Beaumont, Michel
1bis, rue Champollion
F-38000 Grenoble (FR)**

## Description

La présente invention concerne le domaine des circuits de protection contre des surtensions de lignes telles que des lignes téléphoniques.

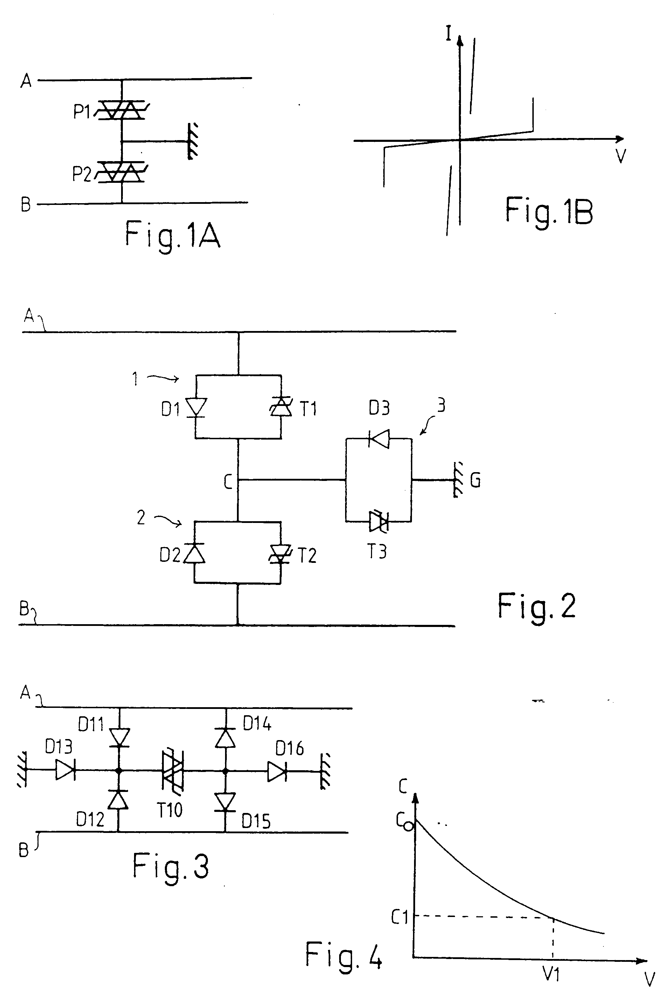

Parmi les circuits connus de protection contre des surtensions, on adopte actuellement fréquemment des schémas du type de celui illustré en figure 1A dans lesquels la protection est assurée par deux composants bidirectionnels P1, P2 connectés entre chacune des lignes et la masse, chacun des composants ayant la caractéristique électrique indiquée en figure 1B. Lorsqu'une surtension apparaît sur l'une des lignes, le composant de protection passe d'un état bloqué (forte impédance) à un état passant (faible impédance) mettant ainsi en court-circuit la ligne avec la masse. Cependant, en état de veille (forte impédance) chacun des deux composants supporte la tension ligne/masse. Les valeurs usuelles de tension sont de -48 V pour une ligne et d'environ 0 V pour l'autre. Cette dissymétrie de tension génère (comme cela sera expliqué ultérieurement) une dissymétrie dans la capacité des composants. Cette dissymétrie admissible pour les réseaux usuels d'avère un handicap majeur pour certaines lignes à réseau numérique.

D'autre circuits de protection ont été proposés et entre autres celui de la figure 2 dans lequel trois ensembles de protection unidirectionnelle 1, 2 et 3 sont connectés entre un point commun C et une première ligne A, une deuxième ligne B et une terre G. Chacun des éléments de protection comprend en antiparallèle un composant de protection unidirectionnelle T et une diode D, respectivement $T_1$, $D_1$ ; $T_2$, $D_2$ ; $T_3$, $D_3$. Dans le schéma de la figure 2, les cathodes des diodes $D_1$, $D_2$, $D_3$ sont reliées les unes aux autres et les anodes des composants de protection $T_1$, $T_2$, $T_3$ sont reliées les unes aux autres.

Une telle structure est par exemple décrite dans le brevet américain 4 282 555.

Les composants de protection $T_1$, $T_2$, $T_3$ sont par exemple des thyristors sans gâchette qui deviennent conducteurs de leur anode vers leur cathode quand la tension à leurs bornes dépasse une valeur de seuil déterminée par fabrication. On pourra néanmoins choisir d'autres composants de protection connus, par exemple des composants du type diode à avalanche ou des thyristors dont la gâchette reçoit un signal de polarisation insuffisant pour les rendre conducteurs mais suffisant pour ajuster leur seuil te tension de déclenchement entre bornes principales.

Un avantage de cette structure, quand les composants de protection $T_1$ sont des thyristors sans gâchette, est qu'elle est facilement intégrable en deux ou même une puce.

La présente invention concerne plus particulièrement le comportement capacitif des circuits du type de ceux des figures 1 et 2.

Les composants de type thyristor ou plus généralement les autres composants de protection unidirectionnels présentent généralement une capacité notable entre leurs électrodes principales. Cette capacité est bien supérieure à celle de diodes classiques telles que des diodes $D_1$, $D_2$ et $D_3$. Ces diodes étant en parallèle sur les composants de protection, on pourra négliger l'influence de leur capacité propre.

Ainsi, la présence des composants de protection modifie la capacité entre chacune des lignes A et B et la terre G. Ceci est sans grande importance quand les lignes sont amenées à véhiculer du courant électrique ou des signaux téléphoniques à faible fréquence mais devient un inconvénient notable quand les lignes sont amenées à transporter des signaux numériques correspondant à des transitions binaires entre deux états, transitions qui doivent être aussi raides que possible. Dans ce cas, la présence de capacités parasites relativement élevées et surtout d'une dissymétrie de capacité entre les lignes d'avère être un obstacle majeur. Ces capacités déforment les signaux et peuvent même éventuellement les rendre indiscernables.

En effet, bien que le circuit de la figure 2 soit symétrique en ce qui concerne la suppression des surtensions sur l'une ou l'autre des lignes A et B, il est dissymétrique en ce qui concerne son comportement capacitif. Cette dissymétrie a été plus particulièrement notée dans le cadre de l'application indiquée comme préférentielle dans le brevet susmentionné, à savoir la protection de lignes téléphoniques.

Pour éviter ce problème, on a été amené dans l'art antérieur à utiliser des structures de protection symétriques à la fois en ce qui concerne la fonction de protection et en ce qui concerne le comportement capacitif. Un exemple d'une telle structure apparaît en figure 3. Dans cette structure, trois diodes D11, D12, D13 sont reliées par leurs cathodes à une première borne d'un composant de protection à conduction bidirectionnelle déclenché par surtension T10, ces trois diodes étant reliées par leurs cathodes respectivement à la ligne A, à la ligne B et à la terre G. Trois autres diodes D14, D15, D16 sont reliées par leurs anodes à la deuxième borne du composant T10 et par leurs cathodes respectivement à la ligne A, à la ligne B et à la terre. Avec cette structure, quelle que soit la polarisation des lignes A et B par rapport à la terre, le composant T10 présente la même capacité et de plus une valeur de capacité réduite car il se trouve à un état polarisé. L'inconvénient de cette structure réside d'une part dans la difficulté de fabrication d'un composant à déclenchement bidirectionnel par surtension réellement symétrique et d'autre part dans la difficulté d'intégration de l'ensemble de la structure sous forme d'un composant monolithique.

Malgré cet inconvénient, on utilise le type de structure de la figure 3 quand les lignes A et B sont amenées à transmettre des signaux numériques.

La présente invention vise à permettre l'utilisation d'une structure du type de celle de la figure 2 dans le cas de lignes à protéger à polarisation dissymétrique tout en gardant l'avantage de l'obtention d'une faible capacité entre chacune des lignes et la terre, les valeurs des capacités entre chacune des lignes et la terre étant relativement proches.

Pour atteindre cet objet, la demanderesse se base sur une analyse des causes pour lesquelles on obtient des valeurs capacitives élevées et dissymétriques dans le cas de montages du type de celui de la figure 3. Il faut noter que cette analyse n'apparaît pas dans l'exposé de l'art antérieur. Jusqu'à présent, l'homme de l'art se contentait de constater que, dans le cas de la configuration de la figure 2 utilisée en téléphonie, une dissymétrie capacitive importante apparaissait et proposait pour résoudre le problème de passer au schéma de la figure 3.

Selon l'invention, il est proposé de modifier seulement légèrement le circuit de la figure 2 pour obtenir une réduction et un équilibrage des valeurs capacitives.

Plus particulièrement, la présente invention prévoit un circuit de protection contre les surtensions, disposé entre une première ligne, une deuxième ligne et la terre, l'une des lignes présentant, à l'état normal, un écart de polarisation par rapport à la terre plus important que l'autre, comprenant trois éléments de protection connectés par leur première borne à un point commun et par leur deuxième borne respectivement à la première ligne, à la deuxième ligne et à la terre, chaque élément de protection comprenant l'association en anti-parallèle d'un composant de protection à conduction unidirectionnelle déclenchable par une surtension et d'une diode, le point commun étant relié à une borne de même polarité de chacun des composants de protection. Les cathodes des composants de protection sont connectées au point commun si la ligne la plus polarisée est polarisée négativement par rapport à la terre, et les anodes des composants de protection sont connectées au point commun si la ligne la plus polarisée est polarisée positivement par rapport à la terre.

Selon un mode de réalisation de la présente invention, chacun des composants de protection est un thyristor sans gâchette.

L'invention s'applique notamment à la protection de lignes téléphoniques dans lesquelles l'une des lignes est polarisée négativement et l'autre ligne est polarisée sensiblement au potentiel de la terre.

Ces objets, caractéristiques et avantages ainsi que d'autres de la présente invention seront exposés plus en détail dans la description suivante de modes de réalisation particuliers faite en relation avec les figures jointes parmi lesquelles :

les figures 1A et 1B représentent un circuit de protection connu et la courbe caractéristique tension courant d'un composant utilisé dans ce circuit ;

la figure 2 représente un circuit de protection connu ;

la figure 3 représente un circuit de protection classiquement utilisé pour réduire les problèmes capacitifs ;

la figure 4 est une courbe de valeur de capacité en fonction de la tension de polarisation pour un composant de protection destinée à expliquer le comportement capacitif du circuit de la figure 2 et du circuit selon la présente invention ;

la figure 5 représente un schéma de circuit de protection selon la présente invention ; et

la figure 6 représente un mode d'intégration monolithique du circuit de la figure 5.

Avant d'exposer la présente invention, on va analyser le comportement capacitif du circuit de la figure 2 dans son application prévue à la protection d'une ligne téléphonique.

Comme le montre la figure 4, la capacité d'un composant de protection dépend largement de sa polarisation. Elle décroît quand cette polarisation augmente. Ainsi, la capacité d'un composant T aura une valeur $C_0$ pour une polarisation nulle et une valeur plus faible $C_1$ pour une polarisation $V_1$. Pour la simplicité de l'exposé, on supposera que $C_1 = C_0/4$.

Dans le cas des lignes téléphoniques, les normes actuelles imposent que l'une des lignes, par exemple la ligne A, soit polarisée à une tension négative $-V_1$ alors que la ligne B est sensiblement au potentiel de la terre (il faut alors considérer que la ligne B est reliée à la terre par une impédance de très forte valeur). En ce cas, en raison de la polarisation de la diode D2, le point commun C sera sensiblement au même potentiel que la ligne B (la terre). En conséquence, le composant de protection $T_1$ est polarisé par une tension $V_1$ tandis que les composants de protection $T_2$ et $T_3$ ne sont pas polarisés. En reprenant l'exemple numérique précédent, la capacité équivalente entre la ligne A et la masse, $C_{AG}$, vaudra sensiblement $C_0/5$ alors que la capacité équivalente $C_{BG}$ entre la ligne B et la masse vaudra seulement environ $C_0/2$.

Ainsi, on trouve dans ce cas une capacité non négligeable entre la ligne B et la terre et un très net déséquilibre entre les capacités relatives par rapport à la terre des deux lignes.

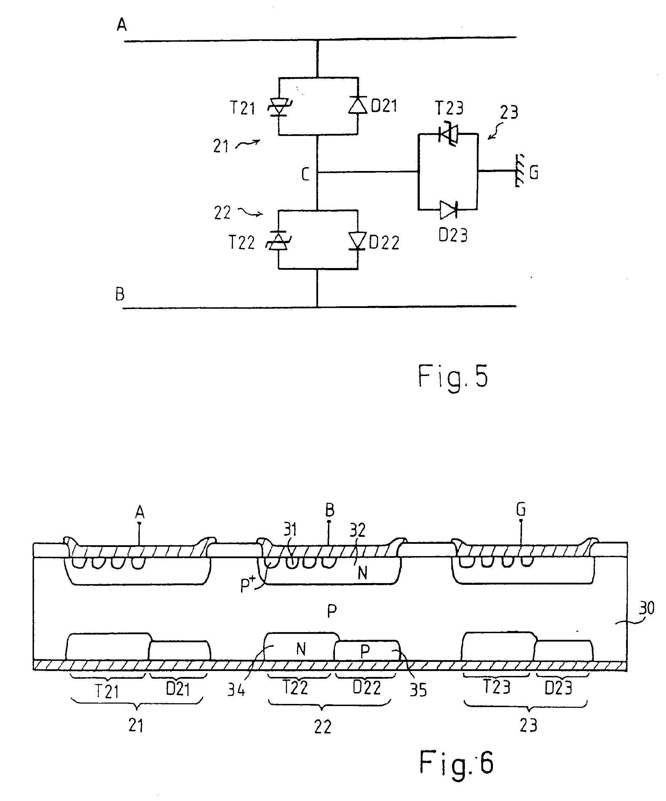

La figure 5 représente un composant de protection selon la présente invention adapté à fonctionner dans le cas où l'une des lignes, par exemple la ligne A, est à un potentiel négatif par rapport à la masse ($V_1$ = -48 volts dans le cas des lignes téléphoniques classiques), et où l'autre ligne est sensiblement au potentiel de la terre (sans être reliée à la terre mais en étant considérée comme connectée à celle-ci par une impédance de très forte valeur).

Des éléments de protection 21, 22, 23, comprenant chacun un composant de protection T et une diode D en anti-parallèle sont connectés avec une inversion de polarité par rapport au cas de la figure 2, à savoir que ce sont les cathodes des éléments de protection T21, T22, T23 qui sont reliées au point commun C au lieu des anodes.

Avec ce montage, en raison de la polarisation des diodes D21 et D22, le point C est au potentiel de -48 volts et non de 0 volt comme dans le cas de la figure 2. En conséquence, le composant de protection T23 est polarisé sous la tension la plus élevée, 48 volts, et présentera une capacité réduite qui se trouvera dans tous les cas en série avec la capacité du composant T21 ou du composant T22. On est donc sûr que la valeur de capacité entre ligne et terre sera inférieure à la capacité du composant T23 polarisé sous la plus haute tension du circuit. Dans le cadre d'un exemple pris en relation avec la figure 2, on obtiendra pour les valeurs équivalentes des capacités entre lignes et terre :

$$C_{AG} = C_0/5, \text{ et } C_{BG} = C_0/8,$$

au lieu de $C_{AG}=C_0/5$ et $C_{BG}=C_0/2$ dans le cas de la figure 2.

Dans un cas pratique, on a constaté que la capacité d'un composant de protection du type thyristor sans gâchette était, en l'absence de polarisation, de l'ordre de 350 picofarads et sous un polarisation de 48 volts de l'ordre de 100 pF. On obtient alors une capacité $C_{AG}$ de 77 pF et une capacité $C_{BG}$ de 50 pF alors que, dans le cas du montage de la figure 2, on aurait obtenu des valeurs respectives de 77 et 175 pF.

Il convient de souligner à nouveau que le cas particulier considéré pour la description des figures 2 et 5, correspond au cas qui se présente le plus couramment dans la pratique où l'on veut protéger des lignes téléphoniques susceptibles de transporter des signaux numériques et que, dans l'art antérieur, on proposait pour cela le schéma de la figure 2. Malgré la faible différence apparente entre les schémas des figures 2 et 5, l'amélioration des valeurs capacitives est considérable.

La figure 6 représente à titre d'exemple une réalisation sous forme de circuit intégré monolithique du circuit de la figure 5. Un ensemble des composants 21, 22, 23 est formé dans une tranche de silicium de type P 30. Un composant de protection T comprend des régions successives de type $P^+$ 31, N 32, P 30 et N 34. La diode correspondante est formée par la même région N 32, la même région de substrat P 30, et une région surdopée de type P 35.

Selon un aspect de la présente invention, on notera qu'il n'est pas prévu de diffusion d'isolement entre les composants 21, 22 et 23. En effet, ces diffusions qui sont classiquement utilisées, par exemple dans la structure illustrée en figure 7 du brevet américain 4 282 555 susmentionné sont inutiles. La prévision de telles diffusions latérales est en pratique un réflexe pour le concepteur de circuits. La motivation est de forcer le courant à circuler par l'électrode de face arrière et de limiter les courants transversaux dans le substrat. Ces courants transversaux pouvant être dangereux s'ils créent des points chauds et une moindre résistance du composant. Ce préjugé s'avère être sans fondement : le courant électrique faible ou fort niveau circule naturellement par le chemin le moins résistif (et non par le plus court) et de ce fait s'écoule naturellement par l'électrode de face arrière qu'une diffusion latérale existe ou non.

La présente invention est susceptible de diverses modifications qui apparaîtront à l'homme de l'art. Notamment, les composants de protection $T_1$, $T_2$, $T_3$ qui ont été décrits comme étant des thyristors sans gâchette peuvent être d'autres composants assurant une fonction de protection équivalente. De plus la présente invention concerne de façon générale la façon de connecter un circuit de protection tout en réduisant les capacités parasites. Par exemple, le circuit de la figure 2 conviendra pour protéger deux lignes dont l'une est sensiblement au potentiel de la terre et dont l'autre est à un potentiel positif (ce qui n'est pas le cas des lignes téléphoniques normalisées).

## Revendications

1. Circuit de protection contre les surtensions, disposé entre une première ligne (A), une deuxième ligne (B) et la terre (G), l'une des lignes présentant, à l'état normal, un écart de polarisation par rapport à la terre plus important que l'autre, comprenant trois éléments de protection (21, 22, 23) connectés par leur première borne à un point commun (C) et par leur deuxième borne respectivement à la première ligne, à la deuxième ligne et à la terre, chaque élément de protection comprenant l'association en anti-parallèle d'un composant de protection (T1, T2, T3) à conduction unidirectionnelle déclenchable par une surtension et d'une diode (D1, D2, D3), le point commun étant relié à une borne de même polarité de chacun des composants de protection, caractérisé en ce que

   les cathodes des composants de protection sont connectées au point commun si la ligne la plus polarisée est polarisée négativement par rapport à la terre, et

   les anodes des composants de protection sont connectées au point commun si la ligne la plus polarisée est polarisée positivement par rapport à la terre.

2. Circuit de protection selon la revendication 1, caractérisé en ce que chacun des composants de protection est un thyristor sans gâchette.

3. Circuit de protection selon la revendication 1, caractérisé en ce qu'il est appliqué à la protection de lignes téléphoniques dans lesquelles l'une des lignes est polarisée négativement et l'autre ligne est polarisée sensiblement au potentiel de la terre.

## Patentansprüche

1. Schutzschaltung gegen Überspannungen, die zwischen einer ersten Leitung (A), einer zweiten Leitung (B) und Masse (G) gelegen ist, wobei die eine Leitung im Normalfall gegenüber Masse eine höhere Vorspannung als die andere Leitung aufweist, mit drei Schutzelementen (21, 22, 23), die jeweils mit ihrem ersten Anschluß an einen gemeinsamen Punkt (C) und mit ihrem zweiten Anschluß an die erste Leitung, die zweite Leitung bzw. an Masse angeschlossen sind, wobei jedes Schutzelement eine Anti-Parallel-Schaltung einer bei Überspannung schaltenden, nur in einer Richtung leitenden Schutzkomponente (T1, T2, T3) und einer Diode (D1, D2, D3) aufweist und der gemeinsame Punkt an einen Anschluß gleicher Polung bei jeder der Schutzkomponenten angeschlossen ist, dadurch gekennzeichnet, daß die Kathoden der Schutzkomponenten mit dem gemeinsamen Punkt verbunden werden, wenn die Leitung mit der höchsten Vorspannung in bezug auf Masse negativ gepolt ist, und die Anoden der Schutzkomponenten mit dem gemeinsamen Punkt verbunden werden, wenn die Leitung mit der höchsten Vorspannung in bezug auf Masse positiv gepolt ist.

2. Schutzschaltung nach Anspruch 1, dadurch gekennzeichnet, daß jede Schutzkomponente ein Thyristor ohne Gate ist.

3. Schutzschaltung nach Anspruch 1, dadurch gekennzeichnet, daß sie zum Schutz von Telefonleitungen verwendet wird, bei denen eine der Leitungen negativ gepolt ist und die andere Leitung im wesentlichen auf Massenpotential liegt.

## Claims

1. An overvoltage protection circuit, arranged between a first conductor (A), a second conductor (B) and ground (G), one of the conductors being normally biased with respect to ground at a higher voltage than the other conductor, comprising three protection units (21, 22, 23) connected by their first terminal to a common point (C) and by their second terminal to said first conductor, said second conductor, and ground, respectively, each protection component comprising the anti-parallel association of an unidirectional overvoltage-triggered protection component (T1, T2, T3) and a diode (D1, D2, D3), said common point being connected to a same polarity terminal of each protection component, characterized in that:

the cathodes of the protection components are connected to the common point if the more heavily biased conductor is biased negatively with respect to ground, and

the anodes of the protection components are connected to the common point if the more heavily biased conductor is biased positively with respect to ground.

2. A protection circuit according to claim 1, characterized in that each protection component is a gate-less thyristor.

3. A protection circuit according to claim 1, characterized in that it is intended to protect telephone lines in which one of the conductors is negatively biased and the other conductor is biased substantially at ground potential.

EP 0 490 788 B1

Fig.1A

Fig.1B

Fig.2

Fig.3

Fig.4

6

A

T21    D21      T23    23

21

C        G

22

T22    D22     D23

B

Fig. 5

A        31    B    32         G

P⁺       N

P           30

N    P

T21   D21    34    T22   D22    35    T23   D23

21          22          23

Fig. 6